# EUROPEAN PATENT APPLICATION

(11) **EP 4 775 811 A2**
(43) Date of publication of application: **15.07.2026**
(21) Application number: 26151419.4
(22) Date of filing: 12.01.2026
(51) Int. Cl.: F02C 3/10, F02C 6/08, F02C 6/14, F02C 6/20, F02K 3/06, F02K 5/00, F02K 5/02

(54) **POWERPLANT ASSEMBLY FOR AN AIRCRAFT**

(30) Priority: 10.01.2025 US 202519016869
(71) Applicant: Pratt & Whitney Canada Corp., (01BE5) Longueuil, QC J4G 1A1 (CA)
(72) Inventor: LANKTREE, Michael, (01BE5) Longueuil, J4G 1A1 (CA); THOMASSIN, Jean, (01BE5) Longueuil, J4G 1A1 (CA)
(74) Representative: Dehns

(57) **Abstract**

A powerplant assembly (24) for an aircraft (20) includes a first driven rotor, a second driven rotor, a gas turbine engine (28), and an auxiliary engine (30A). The gas turbine engine (28) includes a compressor section (36), a combustor section (38), and a turbine section (40) forming a core gas flow path (88). The gas turbine engine (28) further includes a rotational assembly (46) including a bladed turbine rotor (56) and a shaft (52). The shaft (52) couples the bladed turbine rotor (56) with the first driven rotor. The auxiliary engine (30A) is mechanically independent of the gas turbine engine (28). The auxiliary engine (30A) includes an engine output shaft (66), an air inlet (68), and an exhaust outlet (70). The engine output shaft (66) is coupled with the second driven rotor. The auxiliary engine (30A) further forms the core gas flow path (88) with the air inlet (68) connected in fluid communication with the compressor section (36) and the exhaust outlet (70) connected in fluid communication with the combustor section (38).

## Description

### TECHNICAL FIELD

This disclosure relates to a powerplant assembly for an aircraft and, in particular, to a powerplant assembly including a gas turbine engine and at least one mechanically independent auxiliary engine.

### BACKGROUND OF THE ART

Aircraft typically include a powerplant configured to facilitate aircraft propulsion or other aircraft functions such as electrical power generator. Various configurations of such powerplants are known in the art. While these known powerplants may be suitable for their intended purposes, there is always room in the art for improvement.

### SUMMARY

According to an aspect of the present disclosure, a powerplant assembly for an aircraft includes a plurality of mechanical loads, a gas turbine engine, and a first auxiliary engine. The plurality of mechanical loads includes a first driven rotor and a second driven rotor. The gas turbine engine includes a compressor section, a combustor section, and a turbine section. The compressor section, the combustor section, and the turbine section form a core gas flow path through the powerplant assembly. The gas turbine engine further includes a rotational assembly configured for rotation about a rotational axis of the gas turbine engine. The rotational assembly includes a bladed turbine rotor of the turbine section and a shaft. The shaft couples the bladed turbine rotor with the first driven rotor. The first auxiliary engine is mechanically independent of the gas turbine engine. The first auxiliary engine includes a first engine output shaft, a first air inlet, and a first exhaust outlet. The first engine output shaft is coupled with the second driven rotor. The first auxiliary engine further forms the core gas flow path with the first air inlet connected in fluid communication with the compressor section and the first exhaust outlet connected in fluid communication with the combustor section.

In any of the aspects or embodiments described above and herein, the powerplant assembly may further include an electric generator, the first driven rotor may be one of a generator rotor of the electric generator or propulsor rotor, and the second driven rotor is an other of the generator rotor or the propulsor rotor.

In any of the aspects or embodiments described above and herein, the first driven rotor may be the propulsor rotor and the second driven rotor may be the generator rotor.

In any of the aspects or embodiments described above and herein, the powerplant assembly may further include a first electric generator and a second electric generator, the first driven rotor may be a first generator rotor of the first electric generator, and the second driven rotor may be a second generator rotor of the second electric generator.

In any of the aspects or embodiments described above and herein, the first driven rotor may be a first propulsor rotor and the second driven rotor may be a second propulsor rotor.

In any of the aspects or embodiments described above and herein, the plurality of mechanical loads may include a third driven rotor. The powerplant assembly may further include a second auxiliary engine mechanically independent of the gas turbine engine. The second auxiliary engine may include a second engine output shaft, a second air inlet, and a second exhaust outlet. The second engine output shaft may be coupled with the third driven rotor. The second air inlet may be connected in fluid communication with the compressor section. The second exhaust outlet may be connected in fluid communication with the combustor section.

In any of the aspects or embodiments described above and herein, the first auxiliary engine may be mechanically independent of the second auxiliary engine.

In any of the aspects or embodiments described above and herein, the first auxiliary engine may be an intermittent combustion engine.

In any of the aspects or embodiments described above and herein, the intermittent combustion engine may be a rotary engine including a plurality of rotary units coupled with the first engine output shaft, and the plurality of rotary units may be connected in fluid communication with the first air inlet and the first exhaust outlet.

According to another aspect of the present disclosure, a powerplant assembly for an aircraft includes a plurality of mechanical loads, a propulsion system, and an auxiliary intermittent combustion engine. The plurality of mechanical loads includes a first propulsor rotor and a second driven rotor. The propulsion system includes a gas turbine engine. The gas turbine engine includes a compressor section, a combustor section, and a turbine section. The compressor section, the combustor section, and the turbine section form a core gas flow path through the powerplant assembly. The gas turbine engine further includes a rotational assembly configured for rotation about a rotational axis of the gas turbine engine. The rotational assembly includes a bladed turbine rotor of the turbine section and a shaft. The shaft couples the bladed turbine rotor with the first propulsor rotor. The auxiliary intermittent combustion engine is mechanically independent of the gas turbine engine. The auxiliary engine includes an engine output shaft, an air inlet, and an exhaust outlet. The engine output shaft is coupled with the second driven rotor. The auxiliary intermittent combustion engine further forms the core gas flow path with the air inlet connected in fluid communication with the compressor section and the exhaust outlet connected in fluid communication with the combustor section.

In any of the aspects or embodiments described above and herein, the powerplant assembly may further include an electric generator, and the second driven rotor may be a generator rotor of the electric generator.

In any of the aspects or embodiments described above and herein, the powerplant assembly may further include an electrical system including an electrical distribution system electrically interconnecting the electric generator with one or more electrical loads.

In any of the aspects or embodiments described above and herein, the electrical system may further include a battery electrically connected with the electric generator by the electrical distribution system.

In any of the aspects or embodiments described above and herein, the auxiliary intermittent combustion engine may be a rotary engine including a plurality of rotary units coupled with the engine output shaft, and the plurality of rotary units may be connected in fluid communication with the air inlet and the exhaust outlet.

According to another aspect of the present disclosure, a method for driving a plurality of mechanical loads with a powerplant assembly of an aircraft includes driving rotation of a first driven rotor of the plurality of mechanical loads with a turbine section of a gas turbine engine of the powerplant assembly and driving rotation of a second driven rotor of the plurality of mechanical loads with an auxiliary engine, mechanically independent of the gas turbine engine, including receiving at the auxiliary engine a compressed air from the gas turbine engine and directing an exhaust gas from the auxiliary engine to the gas turbine engine.

In any of the aspects or embodiments described above and herein, the method may further include shutting down the gas turbine engine and driving rotation of the first driven rotor by directing the exhaust gas through the turbine section.

In any of the aspects or embodiments described above and herein, the powerplant assembly may further include an electric generator and the second driven rotor may be a generator rotor of the electric generator. The method may further include shutting down the auxiliary engine and driving the auxiliary engine with the electric generator operating as a motor to compress the compressed air and direct the compressed air to the gas turbine engine.

In any of the aspects or embodiments described above and herein, the powerplant assembly may further include an electric generator, the first driven rotor may be one of a generator rotor of the electric generator or a propulsor rotor, and the second driven rotor is an other of the generator rotor or the propulsor rotor.

In any of the aspects or embodiments described above and herein, the first driven rotor may be the propulsor rotor and the second driven rotor is the generator rotor.

In any of the aspects or embodiments described above and herein, the first driven rotor may be a first propulsor rotor and the second driven rotor may be a second propulsor rotor.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### DESCRIPTION OF THE DRAWINGS

FIG. 1 illustrates an aircraft including a propulsion system, in accordance with one or more embodiments of the present disclosure.
FIG. 2 schematically illustrates a powerplant assembly for an aircraft, in accordance with one or more embodiments of the present disclosure.
FIG. 3 schematically illustrates another powerplant assembly for an aircraft, in accordance with one or more embodiments of the present disclosure.
FIG. 4 schematically illustrates another powerplant assembly for an aircraft, in accordance with one or more embodiments of the present disclosure.

### DETAILED DESCRIPTION

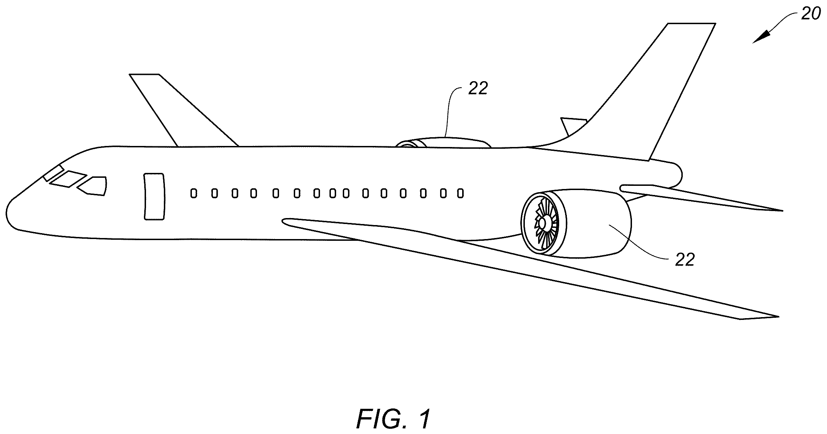

FIG. 1 illustrates an aircraft 20 including at least one propulsion system 22. The aircraft 20 of FIG. 1 is a fixed-wing aircraft (e.g., an airplane). However, the aircraft 20 may alternatively be a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

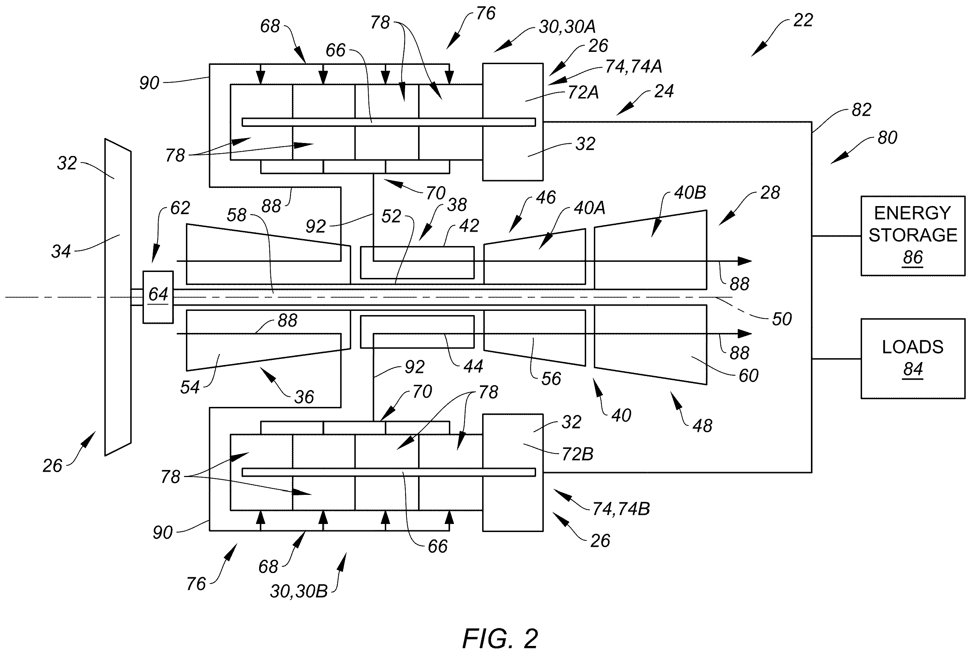

FIG. 2 schematically illustrates a powerplant assembly 24 for the aircraft 20. The powerplant assembly 24 may form a portion of the propulsion system 22. Alternatively, the powerplant assembly 24 may form a portion of an electric power system (or more generally an electric machine) such as, but not limited to, an auxiliary power unit (APU) for the aircraft 20. The powerplant assembly 24 includes at least one mechanical load 26, a gas turbine engine 28, and at least one auxiliary engine 30.

The mechanical load 26 may be configured as or otherwise include a rotor 32 mechanically driven by the gas turbine engine 28 or the auxiliary engine 30. This driven rotor 32 may be a bladed propulsor rotor 34 (e.g., an air mover) where the powerplant assembly 24 is (or is part of) the propulsion system 22. The propulsor rotor 34 includes a plurality of rotor blades arranged circumferentially around and connected to at least (or only) one rotor disk or hub. The propulsor rotor 34 may be an open (e.g., un-ducted) propulsor rotor or a ducted propulsor rotor. Examples of the open propulsor rotor include, but are not limited to, a propeller rotor for a turboprop propulsion system, a rotorcraft rotor (e.g., a main helicopter rotor) for a turboshaft propulsion system, a propfan rotor for a propfan propulsion system, and a pusher fan rotor for a pusher fan propulsion system. Examples of the ducted propulsor rotor include, but are not limited to, a fan rotor for a turbofan propulsion system and a (e.g., first stage) compressor rotor for a turbojet propulsion system. Additionally or alternatively, the driven rotor 32 may be a generator rotor in an electric power generator (or more generally an electric machine).

For ease of description, the powerplant assembly 24 of FIG. 2 is part of the propulsion system 22 with the propulsion system 22 configured as a turboprop propulsion system and the gas turbine engine 28 driving rotation of the propulsor rotor 34 (e.g., a propeller). The gas turbine engine 28 of FIG. 2 includes a compressor section 36, a combustor section 38, and a turbine section 40. The combustor section 38 includes a combustor 42 (e.g., an annular combustor) forming a combustion chamber 44. The turbine section 40 includes a high-pressure turbine section 40A and a power turbine section 40B.

Components of the compressor section 36 and the turbine section 40 of FIG. 2 form a first rotational assembly 46 (e.g., a high-pressure spool) and a second rotational assembly 48 (e.g., a low-pressure rotational assembly) of the gas turbine engine 28. The first rotational assembly 46 and the second rotational assembly 48 are mounted for rotation about a rotational axis 50 (e.g., an axial centerline) of the gas turbine engine 28.

The first rotational assembly 46 includes a first shaft 52, a bladed compressor rotor 54 for the compressor section 36, and a bladed first turbine rotor 56 for the high-pressure turbine section 40A. The first shaft 52 interconnects the bladed compressor rotor 54 and the bladed first turbine rotor 56.

The second rotational assembly 48 includes a second shaft 58 and a bladed second turbine rotor 60 for the power turbine 40B. The second shaft 58 is connected to the bladed second turbine rotor 60. The second shaft 60 operatively connects (e.g., directly or indirectly connects) the bladed second turbine rotor 60 with the propulsor rotor 34. The second shaft 58 of FIG. 2 is coupled with the propulsor rotor 34 through a drivetrain 62. This drivetrain 62 may be configured as a geared drivetrain, where a geartrain 64 (e.g., a transmission, a speed change device, an epicyclic geartrain, etc.) is disposed between and operatively couples the propulsor rotor 34 to the second rotational assembly 48 (e.g., the second shaft 58). With this arrangement, the driven rotor 32 (e.g., the propulsor rotor 34) may rotate at a different (e.g., slower) rotational speed than the second rotational assembly 48. However, the drivetrain 62 may alternatively be configured as a direct drive drivetrain, where the geartrain 64 is omitted. With this arrangement, the driven rotor 32 (e.g., the propulsor rotor 34) may rotate at a same rotational speed as the second rotational assembly 48.

The auxiliary engine 30 is an internal combustion engine configured to use intermittent combustion during operation. In other words, the auxiliary engine 30 may be an engine configuration other than a gas turbine engine configuration. For example, the auxiliary engine 30 may be a reciprocating engine such as, but not limited to, a piston engine or a rotary engine (e.g., a Wankel engine). The powerplant assembly 24 of FIG. 2 includes two auxiliary engines 30-a first auxiliary engine 30A and a second auxiliary engine 30B. The present disclosure, however, is not limited to any particular quantity of auxiliary engines 30 for the powerplant assembly 24.

The auxiliary engine 30, 30A-B includes an engine output shaft 66, an air inlet 68, and an exhaust outlet 70. The auxiliary engine 30 is configured to drive rotation of the engine output shaft 66. The engine output shaft 66 is operatively connected (e.g., coupled) to another driven rotor 32. For example, as shown in FIG. 2, the engine output shaft 66 of the first auxiliary engine 30A is operatively coupled with a generator rotor 72A (e.g., a driven rotor 32) of an electric generator 74, 74A and the engine output shaft 66 of the second auxiliary engine 30B is operatively coupled with a generator rotor 72B (e.g., a driven rotor 32) of an electric generator 74, 74B. The air inlet 68 is connected in fluid communication with the compressor section 36 (e.g., a compressor section 36 discharge) to receive compressed air from the compressor section 36 at the air inlet 68. The exhaust outlet 70 (e.g., an exhaust manifold) is connected in fluid communication with the combustor 42 to direct combustion gas (e.g., exhaust gas) to the combustion chamber 44.

The auxiliary engines 30, 30A-B of FIG. 2 are schematically shown in the form of rotary engines 76. The rotary engines 76 each include a plurality of similar axially aligned rotary units 78 coupled with the engine output shaft 66 (e.g., a common eccentric shaft). The rotary engines 76 shown schematically in FIG. 2 each include four rotary units 78, but it should be understood that the rotary engines 76 may alternatively include any quantity of rotary units 78. Each of the rotary units 78 may be connected in fluid communication with the air inlet 68 and with the exhaust outlet 70.

The electric generators 74, 74A-B may be part of or otherwise electrically connected with an electrical system 80 of the aircraft 20 and/or its powerplant assembly 24. The electrical system 80 may include an electrical distribution system 82 configured to supply electrical power for electrical loads 84 of the aircraft 20 and/or its powerplant assembly 24 such as, but electronic control systems, environmental control systems, electric motors, lighting systems, communication systems, and the like. The electrical system 80 may additionally include an energy storage device 86 (e.g., a battery, a capacitor, etc.) electrically connected with the electrical distribution system 82.

During operation of the powerplant assembly 24 of FIG. 2, ambient air enters the gas turbine engine 28 and is directed through the gas turbine engine 28 and the auxiliary engine 30 along a core gas flow path 88 of the powerplant assembly 24. The ambient air flow along the core gas flow path 88 is compressed in the compressor section 36 by rotation of the bladed compressor rotor 54 and directed to the auxiliary engine 30. The auxiliary engine 30 receives compressed air 90 from the compressor section 36 at the air inlet 68 along the core gas flow path 88, which compressed air is used by the auxiliary engine 30 to facilitate intermittent combustion to drive rotation of the engine output shaft 66. Exhaust gas 92 from the intermittent combustion process is directed to the combustor 42 (e.g., the combustion chamber 44) from the exhaust outlet 70 along the core gas flow path 88. This exhaust gas 92 from the auxiliary engine 30 may include unused oxygen which may facilitate gas turbine engine 28 combustion in the combustion chamber 44. For example, each of the rotary units 78 of the rotary engines 76 of FIG. 2 are configured to operate in a cyclic manner, periodically producing combustion gas which is subsequently directed to the combustor 42 as the exhaust gas 92. Fuel is injected into the combustion chamber 44 and mixed with the exhaust gas 92 to provide a fuel-gas mixture. This fuel-gas mixture is ignited, and combustion products thereof flow through the high-pressure turbine section 40A and the power turbine section 40B and are exhausted from the gas turbine engine 28. The bladed first turbine rotor 56 and the bladed second turbine rotor 60 rotationally drive the first rotational assembly 46 and the second rotational assembly 48, respectively, in response to the combustion gas flow through the high-pressure turbine 40A and the power turbine 40B along the core gas flow path 88. The second rotational assembly 48 (e.g., the second shaft 58) drives rotation of the propulsor rotor 34, for example, through the drivetrain 62 and its geartrain 64.

The present disclosure configuration of the powerplant assembly 24 facilitates mechanical independence between the gas turbine engine 28 and the auxiliary engine(s) 30. In other words, for example, the rotational assemblies 46, 48 of the gas turbine engine 28 are not operatively connected with the auxiliary engine 30 (e.g., the engine output shaft 66) by any mechanical coupling component or assembly such as, but not limited to, a shaft, a gearbox, a belt, a clutch, a transmission, or the like. This mechanical independence between the gas turbine engine 28 and the auxiliary engine(s) 30 facilitates greater flexibility in powerplant assembly 24 packaging (e.g., relative orientations and proximity between the gas turbine engine 28 and the auxiliary engine(s) 30) within the aircraft 20. For example, the gas turbine engine 28 and the auxiliary engine(s) 30 may be located at different portions of the aircraft 20. This mechanical independence between the gas turbine engine 28 and the auxiliary engine(s) 30 additionally facilitates independent speed control of the gas turbine engine 28 and the auxiliary engine(s) 30, thereby facilitating optimal operation across a range of aircraft 20 altitudes and operating conditions. For example, in propulsion system 22 applications such the propulsion system 22 of FIG. 2, the mechanical independence between the gas turbine engine 28 and the auxiliary engine(s) 30 may facilitate optimized gas turbine engine 28 power for aircraft 20 propulsion while efficiently meeting electrical loading (e.g., the electrical loads 84) requirements using the auxiliary engine(s) 30, thereby providing significant fuel savings in comparison to conventional intermittent combustion engine or gas turbine engine configurations.

The present disclosure configuration of the powerplant assembly 24 may additionally facilitate operation of the powerplant assembly 24 with the gas turbine engine 28 or one or more (or all) of the auxiliary engine(s) 30 shut down (e.g., not combusting fuel). For example, the gas turbine engine 28 may be shut down and the exhaust gas 92 from the auxiliary engines 30 may be directed into the combustor 42 and through the turbine section 40 along the core flow gas path 88 to drive rotation of the first rotational assembly 46 and the second rotational assembly 48. For further example, one or more of the auxiliary engine(s) 30 may be shut down while the gas turbine engine 28 and any other auxiliary engine(s) 30 continue to drive their respective driven rotors 32. Alternatively, one or more of the auxiliary engine(s) 30 may be shut down and the electric generator 74 may be operated as a motor to drive rotation of the engine output shaft 66 to draw compressed air from the compressor section 36, further compress the air, and direct the compressed air to the combustor 42 (e.g., the combustion chamber 44).

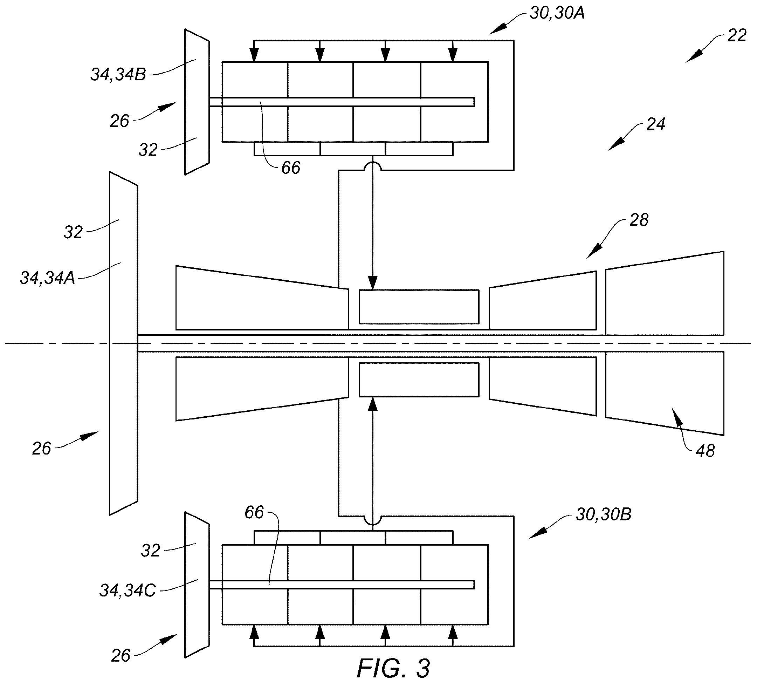

Referring to FIG. 3, in some embodiments, the driven rotor 32 of each of the gas turbine engine 28 and the auxiliary engine(s) 30 may be a discrete propulsor rotor 34. For example, the gas turbine engine 28 (e.g., the second rotational assembly 48) of FIG. 3 is coupled with a first propulsor rotor 34, 34A, the first auxiliary engine 30A (e.g., the engine output shaft 66) is coupled with a second propulsor rotor 34, 34B, and the second auxiliary engine 30B (e.g., the engine output shaft 66) is coupled with a third propulsor rotor 34, 34C.

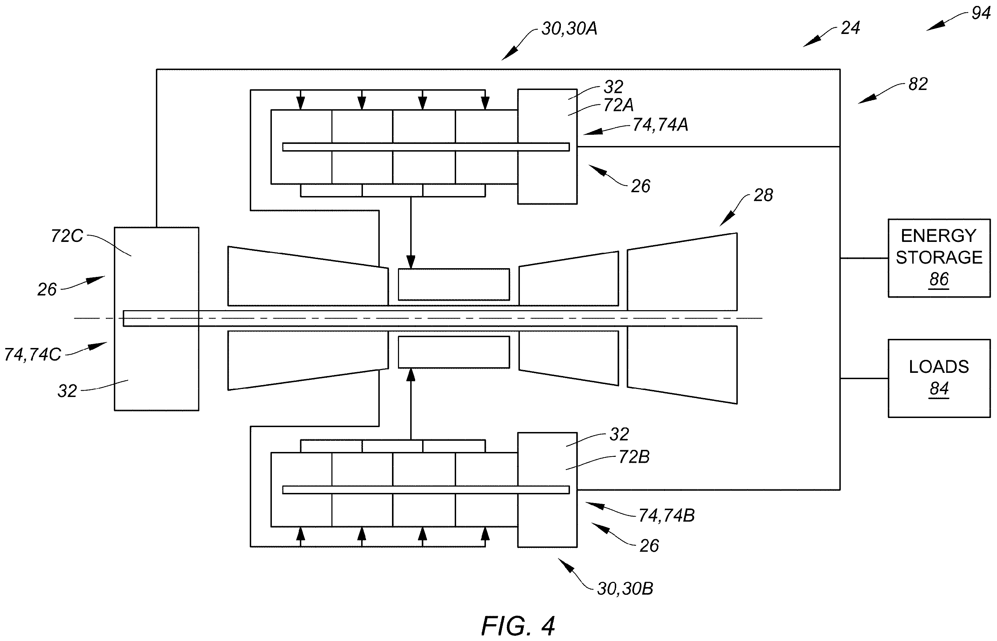

Referring to FIG. 4, in some embodiments, the powerplant assembly 24 may be part of an auxiliary power unit (APU) 94 for the aircraft 20 (see FIG. 1). The powerplant assembly 24 of the APU 94 may be configured with the driven rotor 32 of each of the gas turbine engine 28 and the auxiliary engine(s) 30 as discrete generator rotor 72. For example, the first auxiliary engine 30A (e.g., the engine output shaft 66) is coupled with the first generator rotor 72A of the first electric generator 74A, the second auxiliary engine 30B (e.g., the engine output shaft 66) is coupled with the second generator rotor 72B of the second electric generator 74B, and the gas turbine engine 28 (e.g., the second rotational assembly 48) is coupled with a third generator rotor 72C of a third electric generator 74C. The electric generators 74A-C are electrically connected with the electrical system 80 (e.g., the electrical distribution system 82).

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A powerplant assembly (24) for an aircraft (20), the powerplant assembly (24) comprising:
a plurality of mechanical loads including a first driven rotor and a second driven rotor;
a gas turbine engine (28) including a compressor section (36), a combustor section (38), and a turbine section (40), the compressor section (36), the combustor section (38), and the turbine section (40) form a core gas flow path (88) through the powerplant assembly (24), the gas turbine engine (28) further including a rotational assembly (46) configured for rotation about a rotational axis (50) of the gas turbine engine (28), the rotational assembly (46) including a bladed turbine rotor (56) of the turbine section (40) and a shaft (52), the shaft (52) coupling the bladed turbine rotor (56) with the first driven rotor; and
a first auxiliary engine (30A) mechanically independent of the gas turbine engine (28), the first auxiliary engine (30A) including a first engine output shaft (66), a first air inlet (68), and a first exhaust outlet (70), the first engine output shaft (66) coupled with the second driven rotor, the first auxiliary engine (30A) further forming the core gas flow path (88) with the first air inlet (68) connected in fluid communication with the compressor section (36) and the first exhaust outlet (70) connected in fluid communication with the combustor section (38).

2. The powerplant assembly (24) of claim 1, further comprising an electric generator (74A), wherein the first driven rotor is one of a generator rotor (72A) of the electric generator (74A) or a propulsor rotor (34), and the second driven rotor is another of the generator rotor (72A) or the propulsor rotor (34).

3. The powerplant assembly (24) of claim 2, wherein the first driven rotor is the propulsor rotor (34) and the second driven rotor is the generator rotor (72A).

4. The powerplant assembly (24) of claim 1, further comprising a first electric generator (74A) and a second electric generator (74B), wherein the first driven rotor is a first generator rotor (72A) of the first electric generator (74A), and the second driven rotor is a second generator rotor (72B) of the second electric generator (74B).

5. The powerplant assembly (24) of claim 1, wherein the first driven rotor is a first propulsor rotor (34) and the second driven rotor is a second propulsor rotor (34).

6. The powerplant assembly (24) of any preceding claim, wherein the plurality of mechanical loads includes a third driven rotor, the powerplant assembly (24) further comprising a second auxiliary engine (30B) mechanically independent of the gas turbine engine (28), the second auxiliary engine (30B) including a second engine output shaft (66), a second air inlet (68), and a second exhaust outlet (70), the second engine output shaft (66) is coupled with the third driven rotor, the second air inlet (68) is connected in fluid communication with the compressor section (36), and the second exhaust outlet (70) is connected in fluid communication with the combustor section (38).

7. The powerplant assembly (24) of claim 6, wherein the first auxiliary engine (30A) is mechanically independent of the second auxiliary engine (30B).

8. The powerplant assembly (24) of any preceding claim, wherein the first auxiliary engine (30A) is an intermittent combustion engine,
wherein, optionally, the intermittent combustion engine is a rotary engine (76) including a plurality of rotary units (78) coupled with the first engine output shaft (66), the plurality of rotary units (78) connected in fluid communication with the first air inlet (68) and the first exhaust outlet (70).

9. A powerplant assembly (24) for an aircraft (20), the powerplant assembly (24) comprising:
a plurality of mechanical loads including a first propulsor rotor and a second driven rotor;
a propulsion system (22) including a gas turbine engine (28), the gas turbine engine (28) including a compressor section (36), a combustor section (38), and a turbine section (40), the compressor section (36), the combustor section (38), and the turbine section (40) forming a core gas flow path (88) through the powerplant assembly (24), the gas turbine engine (28) further including a rotational assembly (46) configured for rotation about a rotational axis (50) of the gas turbine engine (28), the rotational assembly (46) including a bladed turbine rotor (56) of the turbine section (40) and a shaft (52), the shaft (52) coupling the bladed turbine rotor (56) with the first propulsor rotor; and
an auxiliary intermittent combustion engine (30A) mechanically independent of the gas turbine engine (28), the auxiliary engine (30) including an engine output shaft (66), an air inlet (68), and an exhaust outlet (70), the engine output shaft (66) coupled with the second driven rotor, the auxiliary intermittent combustion engine (30A) further forming the core gas flow path (88) with the air inlet (68) connected in fluid communication with the compressor section (36) and the exhaust outlet (70) connected in fluid communication with the combustor section (38),
wherein, optionally, the auxiliary intermittent combustion engine (30A) is a rotary engine (76) including a plurality of rotary units (78) coupled with the engine output shaft (66), the plurality of rotary units (78) connected in fluid communication with the air inlet (68) and the exhaust outlet (70).

10. The powerplant assembly (24) of claim 9, further comprising an electric generator (74A), wherein the second driven rotor is a generator rotor (72A) of the electric generator (74A).

11. The powerplant assembly (24) of claim 10, further comprising an electrical system (80) including an electrical distribution system (82) electrically interconnecting the electric generator (74A) with one or more electrical loads (84),
wherein, optionally, the electrical system (80) further includes a battery (86) electrically connected with the electric generator (74A) by the electrical distribution system (82).

12. A method for driving a plurality of mechanical loads with a powerplant assembly (24) of an aircraft (20), the method comprising:
driving rotation of a first driven rotor of the plurality of mechanical loads with a turbine section (40) of a gas turbine engine (28) of the powerplant assembly (24); and
driving rotation of a second driven rotor of the plurality of mechanical loads with an auxiliary engine (30A), mechanically independent of the gas turbine engine (28), including receiving at the auxiliary engine (30A) a compressed air from the gas turbine engine (28) and directing an exhaust gas (92) from the auxiliary engine (30A) to the gas turbine engine (28).

13. The method of claim 12, further comprising shutting down the gas turbine engine (28) and driving rotation of the first driven rotor by directing the exhaust gas (92) through the turbine section (40).

14. The method of claim 12 or 13, wherein the powerplant assembly (24) further includes an electric generator (74A) and the second driven rotor is a generator rotor (72A) of the electric generator (74A), the method further comprising shutting down the auxiliary engine (30A) and driving the auxiliary engine (30A) with the electric generator (74A) operating as a motor to compress the compressed air and direct the compressed air to the gas turbine engine (28).

15. The method of claim 12 or 13, wherein:
the powerplant assembly (24) further includes an electric generator (74A), wherein the first driven rotor is one of a generator rotor (72A) of the electric generator (74A) or a propulsor rotor (34), and the second driven rotor is another of the generator rotor (72A) or the propulsor rotor (34), wherein, optionally, the first driven rotor is the propulsor rotor (34) and the second driven rotor is the generator rotor (72A); or
the first driven rotor is a first propulsor rotor (34) and the second driven rotor is a second propulsor rotor (34).
